Europäisches Patentamt

(19) European Patent Office

Office européen des brevets

(11) Publication number: **0 115 104**
**B1**

(12) **EUROPEAN PATENT SPECIFICATION**

(45) Date of publication of patent specification: **23.09.87**

(51) Int. Cl.⁴: **C 04 B 35/64, B 22 F 3/22**

(21) Application number: **83300348.6**

(22) Date of filing: **24.01.83**

(54) Making shaped sintered inorganic bodies.

(43) Date of publication of application:
**08.08.84 Bulletin 84/32**

(45) Publication of the grant of the patent:
**23.09.87 Bulletin 87/39**

(84) Designated Contracting States:
**DE FR GB NL**

(56) References cited:
**EP-A-0 032 403**
**DE-A-3 201 750**
**DE-B-1 266 202**
**US-A-1 847 197**
**US-A-3 926 656**

**CHEMICAL ABSTRACTS, vol. 97, no. 6, 9th August 1982, page 242, no. 42832f, Columbus, Ohio, USA, V.P. BULYCHEV et al.: "Role of a plasticizer in the die extrusion of zirconium carbide blanks"**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Hashimoto, Tadanori**
**No. 12-2, Tennoucho**
**Takatsuki-shi Osaka (JP)**
Inventor: **Hama, Masaaki**
**No. 10-4-446, Sonehigashimachi 2-chome**
**Toyonaka-shi Osaka (JP)**
Inventor: **Kobayashi, Osamu**
**No. 8-1-206, Natsumidai 1-chome**
**Funabashi-shi Chiba (JP)**

(74) Representative: **Diamond, Bryan Clive et al**
**Gee & Co. Chancery House Chancery Lane**
**London WC2A 1QU (GB)**

## Description

This invention relates to a method of making an inorganic sintered shaped body, by mixing a sinterable inorganic powder and a moldable binder, shaping the mixture by injection molding or extrusion, and heating the mixture to decompose the binder and sinter the powder.

In such a method, the binder has hitherto been selected from the viewpoint of making a mixture which is easily flowable for molding; large amounts of binder, in relation to the inorganic powder, tend to be used because of the limited discharge capacity of the extrusion or injection molding machines, to ensure flowability of powder from the standpoint of the bulk density of the molded article and sintering. However, improvement is desirable in the high density of the molded article which affects the physical properties of the products, and in ease of binder removal during the sintering.

Molded articles obtained by extrusion or injection molding have an advantage that the inorganic power is more homogeneously packed therein than in those obtained by press molding, and therefore, sintered bodies of a uniform particle size are very easy to produce. In press molding, however, molded articles having a powder packing density of 60% based on the theoretical density are obtained relatively easily because the amount of binder used is generally as small as 5% by weight; by contrast, in extrusion and injection moldings, a binder in amount as large as 30% by weight is sometimes used, so that only molded articles having a powder packing density of 40% are obtained. Such molded articles are defective in that bodies obtained by sintering are low in density as compared with those obtained from press molding. Although extrusion and injection moldings are superior in productivity to press molding and slip casting, it was difficult, because of the difficulty in obtaining high-density sintered bodies, to apply them to the production of functional ceramics such as translucent ceramics, magnetic ceramics, dielectric ceramics or high-strength ceramics of which the function is exhibited only in the form of a sintered body having a density near to the theoretical.

With molded articles obtained by extrusion or injection molding in which the powder packing density is low, because of their large shrinkage rate on sintering, it is difficult to maintain the dimensional precision of the sintered body obtained. This becomes a problem particularly with ceramics which are difficult to process after sintering.

In order to improve the foregoing problems encountered in the extrusion or injection molding of inorganic powders, various kinds of binder have been used, including water-soluble and synthetic ones, but none of these, because of their defects described below, allow the foregoing problems to be solved.

Water-soluble binders include starch, cellulose derivatives and polyvinyl alcohols, and are widely used. A smaller amount, as solid, of water-soluble binder can be used than of synthetic resin binder. However, when water-soluble binders are used in an aqueous solution, the amount of the solution is almost equal to that of a synthetic resin binder and requires 20% by weight based on the inorganic powder. As compared with the synthetic resin binders, the water-soluble binder solution is low in viscosity so that it easily penetrates between and disperses the powder. However, due to its pour lubricating property, large quantities of water are necessary to give a required flowability. Further, when powder containing the water-soluble binder is extrusion- or injection-molded, there is a problem, namely because the strength of a molded article is developed with the vaporization of solvent, the molded article immediately after molding has poor strength and easily changes shape. Accordingly, it is difficult.to handle. For this reason, extrusion- or injection-molding is carried out so that molded articles having better strength can be obtained by decreasing the amount of water. But this method, since it is based on the sacrifice of the flowability of powder, causes problems such as increase in discharge pressure as well as abrasion of molding machines by inorganic powders and consequent staining of molded articles. Further, on removing water by drying the molded articles, cracks are easily generated therein owing to non-uniform drying, and in order to avoid this, a long period of time is necessary for drying. This increases the cost of the extrusion- or injection-molding.

As synthetic binders, polystyrene, polypropylene and polyethylene are used, but they have the following defects. These binders, because of their high melt viscosity, do not easily penetrate into the aggregates of inorganic powders, resulting in insufficient dispersion of powder. Further, they produce only molded articles which are low in powder packing density. Consequently, homogeneous and high-density sintered bodies are not obtained therefrom. Synthetic resin binders, because they are used for molding in a molten state, produce molded articles of high strength by immediate cooling after molding. Because of this, powder flowability on molding can be improved by using a large amount of binder, unlike with the water-soluble binders. With an increase in the amount, however, there is a problem that the molded article foams easily due to thermal decomposition gases generated from the binder on sintering. In order to avoid this foaming, a step called a defatting step, for removing the binder by thermal decomposition is applied; however, this requires a longer period of time than drying of the water-soluble binders, thereby resulting in a great reduction in productivity.

There is also a method for producing molded articles of high strength by hardening synthetic resin binders other than the foregoing thermoplastic resins, for examples thermosetting resins such as phenolic or urethane resins, on molding. But with these binders it may happen that, when the molding is interrupted, hardening takes place in the molding machines, making continuation of molding impossible.

DE—A—3201750 discloses making a sintered $Al_2O_3$ body from a composition 50% by weight whereof

2

is a binder consisting, in Example 1, of 12 parts paraffin wax and 1 part stearin (glycerol tristearate) as plasticiser.

DE—B—1266202 discloses making a ceramic body of a heat resistant metal oxide from a composition of 75—95% by weight of ceramic material and 5 to 25% of a powdered polyolefin wax, of which 10—50% may be replaced by an ester wax, e.g. carnauba wax or beeswax.

However these compositions are not free from problems.

Thus, with all conventional binders for extrusion or injection molding, there are problems, such as the low rate of powder packing or long period of time for removal of binders. In addition, molded articles which are weak are produced depending upon the kind of binder; and they contain impurities, or become heterogeneous due to increase in the required discharge capacity of molding machines and abrasion of the machines. Consequently, there is a need for improved binders to solve these problems.

We have succeeded in obtaining molded articles free from these defects by using as binder an oxidized wax.

According to the invention, in the aforesaid type of method, there is used as binder a mixture of an oxidized paraffin wax or oxidized micro-crystalline wax with a higher fatty acid.

The oxidized wax mixture used as binder in the present invention, because of its low viscosity on melting and good compatibility with inorganic powders, easily penetrates into the gaps of aggregates of fine inorganic powders, and has a superior lubricating property. For this reason, this binder makes it possible to obtain molded articles having a homogeneous powder dispersion as well as a very high powder packing density which is not attained with conventional binders. Further, molded articles produced can harden easily and immediately after molding by cooling. Particularly, in extrusion molding in which the dimensional precision of molded articles is difficult to maintain, the binder in the present invention can markedly improve the dimensional precision as compared with the conventional ones. Of the conventional binders, thermoplastic synthetic resin binders are also capable of hardening molded articles by cooling; however, these binders have a high melt viscosity and a poor flowability as compared with the binder of the present invention. In order to make up for these defects, an increased amount of a binder which is poorer in thermal conductivity than the inorganic powder must be used. This is not desirable because much time is taken for cooling the molded article and it easily changes shape during cooling. Further, when conventional water-soluble binders are used, the molded article is weak and not easy to handle until the water as solvent is vaporized away. Further, molded articles such as thin products and large-sized ones sometimes change in shape by their own weight whereby maintenance of dimensional precision is even more difficult.

The oxidized wax type binder in the present invention not only solves the problems of the conventional binders in extrusion or injection molding or inorganic powders, but also has a markedly superior property over conventional binders with respect to the removal of binder as described below.

The binder in the present invention is composed of a number of waxes containing oxidized wax components. Therefore, the binder has no definite thermal decomposition point, its temperature range of thermal decomposition being considerably large. For this reason, when molded articles obtained with this binder are heated, thermal decomposition of the wax type binder does not occur suddenly at a certain temperature, but shows a slow progress with rise in temperature, which is a characteristic not observed with conventional binders. Thus, when conventional synthetic resin binders are used, generation of foams or cracks in molded articles due to gases evolved from suddenly decomposing binders cannot be avoided unless the rate of temperature-rise in the vicinity of the thermal decomposition temperature is no more than several degrees per hour, or even slower than this. Contrary to this, with the oxidized wax type binder of the present invention, it has become possible to remove the binder without doing any damage to the molded articles.even by heating at a rate of temperature rise of several tens to 100 degrees per hour.

Thus, the invention allows the speeding of the thermal decomposition of the binder. In producing the sintered body of inorganic powder by extrusion or injection molding using conventional binder, the longest period of time is required for the removal of the binder. Consequently, the oxidized wax type binder in the present invention allows great increase in productivity of the method.

Generation of foams and cracks on molded articles was also observed with the conventional water-soluble binders on removing water as a solvent from the molded articles unless the water was vaporized as slowly as with the synthetic resin binders, which is costly and unproductive. Also, with wax type binders, their thermal decomposition in the course of heating is sudden when they consist mainly of a single compound, unlike in the binder of the present invention. Therefore, the effect observed with the oxidized wax type binder of the present invention is not obtained.

Thus, by using the oxidized wax type binder, it is possible to produce homogeneous, high-packing density molded articles or inorganic powders which cannot be obtained by extrusion or injection molding using conventional binders, and therefore, great reduction in the sintering temperature also is possible.

These effects brought by the oxidized wax type binder in the present invention are particularly displayed in the production of translucent ceramics, such as a translucent alumina sintered body requiring high-temperature sintering. Accordingly, the present invention is very useful in allowing high quality articles to be supplied at low cost.

Said binder comprising an oxidized wax can be used alone or in compositions, comprising mixtures thereof, from the standpoint of moldability. A suitable higher fatty acid is stearic acid. Oxidized waxes having an acid value of 1 to 80 mg KOH/g prepared by oxidizing a linear hydrocarbon having an average of 17 to 40 carbon atoms per molecule or a branched hydrocarbon having an average of 30 to 150 carbon atoms are preferred with respect to the moldability and thermal decomposability of the resultant compositions.

The content of the oxidized wax in the binder in the invention is preferably not less than 1% by weight in terms of thermal decomposability, and particularly good results are obtained when the content is not less than 5% by weight; the content of the oxidized wax is most preferably not less than 10% by weight, in which case the greatest effect is displayed.

The amount of the oxidized wax type binder used varies with the physical property of the inorganic powder to be molded. However, it is preferably in a range of 15 to 60% by volume based on the molded article comprising the binder and the inorganic powder. When the amount is below this range, flowability on molding is so insufficient that molding becomes difficult. When the amount exceeds this range, the ease of thermal decomposition of binder, which is a feature of the present invention, is decreased. When the proportion of the binder in the molded article is 25 to 55% by volume, the wax type binder best displays its effect.

Examples of the inorganic powder used in the present invention include powders of single metallic or non-metallic elements and oxides or non-oxides thereof which are usable for powder metallurgy or production of ceramics. Also, these powders may be composed of single elements, alloys or compounds, alone or in combination. Oxides and non-oxides may contain one or more metallic elements as well as cations and anions. Further, systems containing the oxides or non-oxides and additives added to improve the characteristics thereof may also be applied in the present invention.

Examples of specific metallic powders include aluminum of Group III of the Periodic Table (the long form is referred to); silicon of Group IV; scandium, yttrium, lanthanoids and actinoides of Group IIIa; titanium, zirconium, hafnium and thorium of Group IVa; vanadium, niobium, tantalum and protactinium of Group Va; chromium, molybdenum, tungsten and uranium of Group VIa; manganese, technetium and rhenium of Group VIIa; iron, cobalt, nickel, ruthenium, rhodium, palladium, osmium, iridium and platinum of Group VIII; copper, silver and gold of Group Ib; zinc and cadmium of Group IIb; thallium of Group IIIb; germanium, tin and lead of Group IVb; arsenic, antimony and bismuth of Group Vb; and tellurium and polonium of Group VIb.

Specific examples of the oxide powders include oxides of the above referred to metals. Oxides of metals other than those above-mentioned include beryllium oxide, magnesium oxide, calcium oxide, strontium oxide, barium oxide, lanthanum oxide, gallium oxide, indium oxide and selenium oxide. Specific examples of oxides containing a plural number of metal elements, generally called double oxides, include the following which are classified with respect to crystal structure: perovskite-type oxides such as $NaNbO_3$, $SrZrO_3$, $PbZrO_3$, $SrTiO_3$, $BaZrO_3$, $PbTiO_3$, $AgTaO_3$, $BaTiO_3$ or $LaAlO_3$; spinel-type oxides such as $MgAl_2O_4$, $ZnAl_2O_4$, $CoAl_2O_4$, $NiAl_2O_4$, $NiCr_2O_4$, $FeCr_2O_4$, $MgFe_2O_4$, $Fe_3O_4$ or $ZnFe_2O_4$; illmenite-type oxides such as $MgTiO_3$, $MnTiO_3$, $FeTiO_3$, $CoTiO_3$, $NiTiO_3$, $ZnTiO_3$, $LiNbO_3$ or $LiTaO_3$; and garnet-type oxides such as rare earth-gallium garnet represented by $Gd_3Ga_5O_{12}$ and rare earth-iron garnet represented by $Y_3Fe_5O_{12}$.

Examples of non-oxide powders of metal include carbides, nitrides, borides and sulfides of the metals described above. Of these metal non-oxides, particularly effective are carbides such as SiC, TiC, WC, TaC, HfC, ZrC and $B_4C$; nitrides such as $Si_3N_4$, AlN, BN and TiN; and borides such as $TiB_2$, $ZrB_2$ and $LaB_6$.

The binder used in the present invention is useful independently of the particle size and shape of the powder. It is however most effective when used with powders of not more than 100 µm average particle size. Also, as the powder becomes fine, the homogenity of molded articles becomes important, so that the binder is particularly effective when used with powders of not more than 20 µm average particle size. Further, the binder exhibits its effect most when applied to powders of not more than 5 µm average particle size. The binder is effective when used with super-fine powders of less than 0.01 µm average particle size; however, it displays its effects better when applied to fine powders of not less than 0.01 µm average particle size.

The inorganic powder is preferably an oxide powder, particularly a metal oxide powder for the production of translucent material, insulating materials, semi-conductor materials, piezoelectric materials, magnetic materials or electro-optical materials. Further, the present invention is particularly effective in producing translucent materials such as $Al_2O_3$, MgO, $Y_2O_3$ and $MgAl_2O_4$ formed into pipes as illumination tubes for a discharge lamp, and $Pb_{1-x}La_xZr_{1-y}Zr_yO_3$ (wherein x is 0 to 1.0 and y is 0 to 1.0) formed into various shapes.

The method of the invention can be carried out using extrusion and injection molding machines for plastics or ceramics which can be heated to a temperature more than that at which the binder composition melts. Also, provided that the oxygen-containing wax type binder retains its effect, the inorganic powder and the binder can be previously kneaded or granulated and then molded in the molding machine, or after blending, directly added to the machine and molded. The molded body is heated to carry out defattying and calcination. The calcined body is sintered by a usual method.

The present invention will be illustrated in detail by the following examples and comparative examples. Unless otherwise stated, all percentages in the examples are by weight. Of the physical properties of sintered bodies, the density is a value, expressed in percent, of the ratio of the density of sintered body to the theoretical density of aluminum oxide. The light transmittance is a value, expressed in percent, of the ratio of the intensity of incident light when parallel luminous flux is emitted at a right angle to the longitudinal direction of a pipe-like sintered body 0.8 mm in thickness (vertical to the inner wall surface of the pipe) at the inner surface thereof to the intensity of the transmitted luminous flux on the extension of the incident luminous flux of the luminous fluxes passing through the sample.

Example 1

One hundred grams of oxidized microcrystalline wax (m.p. 78°C; acid value: 12 mg-KOH/g) as oxygen-containing wax, 20 g of stearic acid and 1 kg of aluminum oxide powder (purity, 99.9%; average particle size, 0.5 µm) to which 0.1% of magnesium oxide had been added, were kneaded at 160°C for 10 minutes on a kneader. This mixed composition was extrusion-molded at 90°C to 180°C into a pipe of 10 mm in inside diameter and 1 mm in thickness, and then heated at a temperature gradient of 50°C/hr and maintained at 800°C for 1 hour to carry out defatting and calcination. Thereafter, the pipe was sintered at 1700°C for 3 hours in a vacuum to obtain a translucent alumina sintered pipe. The result of the pipe thus obtained is shown in Table 1.

As is apparent from Table 1 (including the result of later-mentioned Comparative Examples), only the oxygen-containing wax type binder used in the invention gives flowability on molding, the molded article has a high powder packing density, time required for defatting is short, and the sintered body has high translucency.

Comparative Example 1

The procedure of Example 1 was repeated except that paraffin wax (m.p. 70°C) and microcrystalline wax (m.p. 78°C) each comprising hydrocarbons was used in place of the oxygen-containing wax, and moldability, defatting property and the performances of sintered body were evaluated.

The molded articles obtained in this Example, because of their sudden thermal decomposition on defatting, showed the generation of foams and cracks. For this reason, in producing the sintered body, defatting was carried out by heating to 400°C at a temperature gradient of 1°C/hr over a 50 times longer period of time than in Example 1. The result of evaluation is shown in Table 1.

Comparative Example 2

Using 20 g of stearic acid and 100 g of polystyrene in place of the wax type binder in Example 1, extrusion molding was carried out at 180°C in the same manner as in Example 1. But, the flowability was poor so that a molded article was not obtained. Then, the amount of polystyrene was increased to 170 g, and extrusion molding and defatting were carried out in the same manner as in Example 1. Under the same defatting condition as in Example 1, however, the decomposition of polystyrene was so sudden that the molded article foamed. The sintered body was prepared by defatting at a rate of heating of 1°C/hr in the same manner as in Comparative Example 1.

Comparative Example 3

Example 1 was repeated except that extrusion molding was carried out at room temperature using 200 g of water and 50 g of polyvinyl alcohol in place of the oxygen-containing wax type binder, and moldability, defatting property and the performances of sintered body were compared. But the molded article obtained changed in shape immediately after extrusion due to its own weight, and thus the section of pipe was not circular. Also, under the same heating condition as in Example 1, evaporation of water at a temperature in the vicinity of 100°C was so sudden that cracks were formed in the molded article. For this reason, the molded article was heated as follows so as to prevent cracks from forming in the molded article: heating to 100°C at a temperature gradient of 2°C/hr under saturated steam pressure; heating at 100°C for 5 hours; heating to 800°C at a temperature gradient of 20°C/hr; and then heating at 800°C for 1 hour. Thereafter, sintering was carried out in the same manner as in Example 1, but a sintered body having translucency was not obtained.

Example 2

A mixture of the oxygen-containing wax type binder of Example 1 and an aluminum oxide powder was injection molded into a molded article 20 mm (wide)×50 mm (long)×2 mm (thick) on a screw-type injection molding machine under the following conditions: Cylinder temperature, 120°—180°C; mold temperature, room temperature; pressure, 700 kg/cm$^2$; residence time in mold, 2 seconds. The molded article was homogeneous without cavities. This molded article was defatted and sintered in the same manner as in Example 1. The sintered body obtained showed good translucency.

TABLE 1
Relation of binder composition to moldability, defatting
property and physical property of sintered body

| | Classification of binder | Composition of binder | Moldability | | | Defatting property | | Physical property of sintered body | |
|---|---|---|---|---|---|---|---|---|---|
| | | | Flowability on molding | Dimensional stability of molded article | Packing density of powder (%) | Stability by heating/ defatting at 50°C/hr | Period of time required for defatting to 400°C (hr) | Density (%) | Light trans- mittance (%) |
| Example 1 | Oxygen- containing waxes | Oxidized microcry- talline wax and stearic acid | ◎ | ◎ | 65 | Good | 8 | 99.9 | 35 |
| Comparative Example 1 | Waxes containing no oxygen- containing waxes | Paraffin wax | ○ | ◎ | 63 | Foaming cracking | 400 | 99.8 | 30 |
| | | Microcry- talline wax | ○ | ◎ | 63 | " | 400 | 99.8 | 30 |
| Comparative Example 2 | Thermoplastic synthetic resins | Polystyrene and stearic acid | × | ○ | 53 | Foaming | 400 | 99.4 | 13 |
| Comparative Example 3 | Water-soluble polymers | Polyvinyl alcohol and water | × | × | 48 | Cracking | 90 | 99.3 | 10 |

◎: excellent
○: good
×: bad

**Claims**

1. A method of making an inorganic sintered shaped body, by mixing a sinterable inorganic powder and a moldable binder, shaping the mixture by injection molding or extrusion, and heating the mixture to decompose the binder and sinter the powder, characterised in that the binder comprises a mixture of an oxidized paraffin wax or oxidized micro-crystalline wax with a higher fatty acid.

2. A method as claimed in Claim 1, wherein the proportion of wax binder in the mixture is 15 to 60% by volume.

3. A method as claimed in Claim 1 or 2, wherein the binder contains not less than 5% by weight of the oxidized wax.

4. A method as claimed in Claim 1, 2 or 3, wherein the oxidized wax is one having an acid value of 1 to 80 mg KOH/g, prepared by oxidizing a linear hydrocarbon having an average of 17 to 40 carbon atoms or a branched hydrocarbon having an average of 30 to 150 carbon atoms.

5. A method as claimed in any of Claims 1 to 4, wherein the inorganic powder comprises particles having an average size of not more than 20 μ, the powder being a metal oxide, metal double oxide, metal carbide, metal nitride or metal boride.

6. A method as claimed in Claim 5, wherein the inorganic powder is a metal oxide or metal double oxide used as a material for translucent ceramics.

7. A method as claimed in Claim 6, wherein the inorganic powder is an aluminium oxide and is comprised of particles having an average particle size of not more than 20 μm.

**Patentansprüche**

1. Verfahren zur Herstellung eines anorganischen Sinterformteils durch Vermischen eines sinterbaren anorganischen Pulvers und eines formbaren Bindemittels, Formen des Gemisches durch Spritzgießen oder Strangpressen, und Erhitzen des Gemisches, um das Bindemittel zu zersetzen und das Pulver zu sintern, gekennzeichnet dadurch, daß das Bindemittel ein Gemisch aus einem oxidierten Paraffinwachs oder einem oxidierten mikrokristallinen Wachs mit einer höheren Fettsäure umfaßt.

2. Verfahren nach Anspruch 1, wobei der Anteil des Wachsbindemittels in dem Gemisch 15 bis 60 Volumenprozent beträgt.

3. Verfahren nach Anspruch 1 oder 2, wobei das Bindemittel mindestens 5 Gewichtsprozent des oxidierten Wachses enthält.

4. Verfahren nach Anspruch 1, 2 oder 3, wobei das oxidierte Wachs einen Säurewert von 1 bis 80 mg KOH/g aufweist und durch Oxidieren eines unverzweigten Kohlenwasserstoffs mit durchschnittlich 17 bis 40 Kohlenstoffatomen oder eines verzweigten Kohlenwasserstoffes mit durchschnittlich 30 bis 150 Kohlenstoffatomen hergestellt worden ist.

5. Verfahren nach einem der Ansprüche 1 bis 4, wobei das anorganische Pulver Teilchen mit einer Durchschnittsgröße von höchstens 20 μm enthält und ein Metalloxid, Metall-Doppeloxid, Metallcarbid, Metallnitrid oder Metallborid ist.

6. Verfahren nach Anspruch 5, wobei das anorganische Pulver ein Metalloxid oder ein Metall-Doppeloxid ist, das als Material für durchsichtige Keramik verwendet wird.

7. Verfahren nach Anspruch 6, wobei das anorganische Pulver ein Aluminiumoxid ist und Teilchen mit einer durchschnittlichen Teilchengröße von höchstens 20 μm enthält.

**Revendications**

1. Procédé pour préparer un corps façonné fritté minéral, par mélangeage d'une poudre minérale frittable et d'un liant moulable, façonnage du mélange par moulage par injection par extrusion, et chauffage du mélange pour décomposer le liant et fritter la poudre, procédé caractérisé en ce que le liant comprend un mélange d'une cire de paraffine oxydée ou d'une cire microcristalline oxydée, avec un acide gras supérieur.

2. Procédé tel que revendiqué à la revendication 1, dans lequel la proportion du liant du type cire présente dans le mélange est de 15 à 60% en volume.

3. Procédé tel que revendiqué à la revendication 1 ou 2, dans lequel le liant ne contient pas moins de 5% en poids de la cire oxydée.

4. Procédé tel que revendiqué à la revendication 1, 2 ou 3, dans lequel la cire oxydée est une cire ayant un indice d'acide valant de 1 à 80 mg de KOH/g, préparée par oxydation d'un hydrocarbure linéaire ayant en moyenne 10 à 17 atomes de carbone ou d'un hydrocarbure ramifié ayant en moyenne de 30 à 150 atomes de carbone.

5. Procédé tel que revendiqué dans l'une quelconque des revendications 1 à 4, dans lequel la poudre minérale comprend des particules ayant une dimension moyenne non supérieure à 20 μm, la poudre étant celle d'un oxyde de métal, d'un oxyde double de métal, d'un carbure de métal, d'un nitrure de métal ou d'un borure de métal.

6. Procédé tel que revendiqué à la revendication 5, dans lequel la poudre minérale est une poudre d'un

# 0 115 104

oxyde de métal ou d'un oxyde double de métal, utilisée comme matériau pour obtenir une matière céramique translucide.

7. Procédé tel que revendiqué à la revendication 6, dans lequel la poudre minérale est celle d'un oxyde d'aluminium et elle est constituée de particules ayant une granulométrie, ou dimension particulaire, moyenne non supérieure à 20 µm.

8